# EUROPEAN PATENT APPLICATION

(11) **EP 4 659 973 A1**
(43) Date of publication of application: **10.12.2025**
(21) Application number: 24180629.8
(22) Date of filing: 06.06.2024
(51) Int. Cl.: B60C 99/00, B60C 23/20

(54) **ACTIVE TYRE AND GRIP CONTROL SYSTEM FOR A VEHICLE COMPRISING SUCH AN ACTIVE TYRE**

(71) Applicant: Tóth, Miklós Tamás, 2400 Dunaújváros (HU); Bojér, Zoltán, 2422 Mezöfalva (HU)
(72) Inventor: Tóth, Miklós Tamás, 2400 Dunaújváros (HU)
(74) Representative: Dwornik, Marek

(57) **Abstract**

The invention relates to an active tyre (10) having a tread (12), the active tyre (10) comprises an electrically controllable active layer (20) arranged under the tread (12), the active layer (20) being provided with a temperature control unit (30) for varying the temperature of the tread (12).

The invention also relates to a grip control system (100) for a vehicle, the system comprises an active tyre (10) according to any one of claims 1 to 13, sensors (110) for directly or indirectly determining the grip of the active tyre (10) on a road surface, and an electronic control unit (120) for controlling the active layer (20) based on signals from the sensors (110).

## Description

The invention relates to an active tyre comprising a tread.

The invention further relates to a grip control system for a motor vehicle comprising such an active tyre.

A tyre's function is to ensure the transfer of forces between the vehicle and the road. The weight of the vehicle represents the vertical forces, acceleration-deceleration the tangential forces, and when cornering, lateral (axial) forces act. The tyre must be able to withstand all these forces. In the case of a passenger car, these forces must be transmitted in the road contact area of the tread, which is only the size of the palm of a hand.

Tyre grip plays a key role in vehicle safety and performance. Grip is what allows a tyre to effectively contact the road surface. If the tyre has good grip, the vehicle can stop faster and with shorter braking distances, reducing the risk of an accident. During cornering, tyre grip provides the lateral force needed to keep the vehicle on the curve without skidding or sliding. When the vehicle is accelerating, tyre grip ensures that the force is transferred to the road surface. If the tyres do not grip properly, the wheels can spin, which reduces acceleration performance and increases wear.

During a vehicle's travel, the type and quality of the road surface, the weather, the speed and the physical parameters of the load are constantly changing, determining and altering the grip conditions. For this reason, vehicles are equipped with active electronic solutions (e.g. ABS, ESP) that are able to extend the current grip safety to their physical limits. However, these systems can only interfere with the operation of the vehicle, typically the magnitude and distribution of braking forces, but cannot change the actual grip of the tyres.

The technical gist of traditional tyres has been known since their invention. Previously diagonal, nowadays radial, inflatable with or without inner tubes, and with a variety of rubber compounds and patterns, manufacturers are trying to produce the best possible product. Conventional tyres, which are still in use worldwide, can only provide adequate grip (through the pattern and material of the tyre) within a very narrow range and have little ability to adapt to changes in environmental conditions. For this reason, several types of tyres are produced, depending on the season, road conditions and vehicle type. There are winter, summer, sport, standard, heavy duty, high speed, e-vehicle types, but none of these types can actively change their grip performance due to the fact that the material composition and pattern of the tyre is fixed.

Of course, there have been attempts and developments to extend the optimum operating range of tyres. For example, the compound of so-called four-season tyres is such that they retain their flexibility over a wider temperature range than conventional tyres. They do not harden excessively in cold conditions and do not become too soft in hot conditions. The tread pattern of four-season tyres is designed to provide acceptable grip on dry, wet and snowy surfaces. Although versatile, four-season tyres do not offer the same level of performance as specially designed summer or winter tyres. In summer they do not provide as good grip and cornering stability as summer tyres, and in winter they are not as effective on snow and ice as winter tyres. This means that they are not suitable for use in extreme weather conditions. Therefore, for example, the changeover from winter to summer can still only be effectively achieved by changing tyres that are suitable for the appropriate season, especially for higher performance vehicles and more extreme weather conditions.

We recognised that by actively varying the physical properties of the tyre tread (e.g. its temperature), it is possible to adapt effectively to almost any road and weather conditions during vehicle operation and create the ideal grip on the tyre tread at any given time. This can significantly improve the vehicle's braking distance, cornering stability and acceleration.

We recognised that the physical properties of the tyre tread can be varied according to changing environmental conditions as the vehicle moves, using an electrically controlled active layer built into the tyre. It has been recognised that one of the most important parameters for tyre grip, the tread temperature, can be effectively varied and adjusted to the ideal grip value for the current conditions by means of an active layer built into the tyre. With the appropriate design of the active layer, it is possible not only to heat the tread, but also to cool it if necessary, so that the tyre according to the invention can be used effectively not only in wide temperature ranges, but also under extreme operating conditions.

We recognised that the actual grip of a tyre is influenced not only by its temperature but also by other physical parameters of the tread, which can also be specifically controlled by a properly designed, electrically controlled active layer. We found that appropriate mechanical vibration of the tread can significantly increase tyre grip in wet conditions and reduce aquaplaning by increasing the water displacement of the tyre. It is also recognised that by using a tread containing magnetisable particles and an active layer adapted to generate an electromagnetic field, the hardness/softness of the tread and hence its grip can be varied instantaneously according to the current road conditions. It is also recognised that with a properly designed active layer and tread, the tread pattern can be changed even on the go, thus maintaining optimum tyre grip in different environmental conditions.

It is recognised that the aforementioned electrically controllable active layer can be integrated into the inherently layered structure of tyres, and that the active layer can be powered, for example, through the rim.

It is an object of the invention to provide an active tyre and a grip control system comprising such an active tyre, free from the drawbacks of prior art solutions. In particular, it is an object of the invention to provide an active tyre in which one or more physical parameters of the tread can be varied according to the current road and environmental conditions by means of an active layer incorporated in the tyre, thereby maintaining the grip of the tread in contact with the road at an optimal level.

According to the invention, this problem was solved by means of an active tyre with an electrically controllable active layer arranged under the tread, which active layer is provided with a temperature control unit adapted to vary the tread temperature. The problem is further solved by means of a grip control system comprising such an active tyre, sensors for directly or indirectly detecting the grip of the active tyre on the road surface, and an electronic control unit for controlling the active layer on based on the signals from the sensors.

The essence of the invention is that the tyre has an electrically controlled active layer under the tread, which can change the temperature of the tread and thus improve grip. The active layer is preferably designed in such a way that, in addition to the temperature, it can also influence other physical states of the tread, such as its vibrational state or its magnetic state, thereby increasing the grip at any given moment.

The invention also relates to a grip control system for a motor vehicle, the system comprising an active tyre according to the invention, sensors for directly or indirectly detecting the grip of the active tyre on the road surface, and an electronic control unit for controlling the active layer on the basis of the signals from the sensors.

Some preferred embodiments of the invention are defined in the dependent claims.

Further details of the invention are described by means of a drawing and exemplary embodiments. In the drawing,
Figure 1a is a schematic sectional view of an active tyre according to the invention, which illustrates an exemplary embodiment of the temperature control unit including a heating line;
Figure 1b is a schematic sectional view of an active tyre according to the invention, which illustrates an exemplary embodiment of the temperature control unit containing a Peltier element;
Figure 2 is a schematic view of an exemplary embodiment of an active layer according to the invention containing a resonator unit;
Figure 3 is a schematic view of an exemplary embodiment of an active layer according to the invention containing an electromagnetic unit;
Figure 4a is a schematic representation of the material structure of a tread containing magnetisable particles in the presence of an electromagnetic field;
Figure 4b is a schematic representation of the material structure of a tread containing magnetisable particles in the absence of an electromagnetic field;
Figure 5a is a schematic cross-sectional view of an exemplary embodiment of an active tyre according to the invention including water expelling grooves and actuators, the
Figure 5b is a schematic cross-sectional view illustrating another possible exemplary embodiment of an active tyre according to the invention including water expelling grooves and actuators;

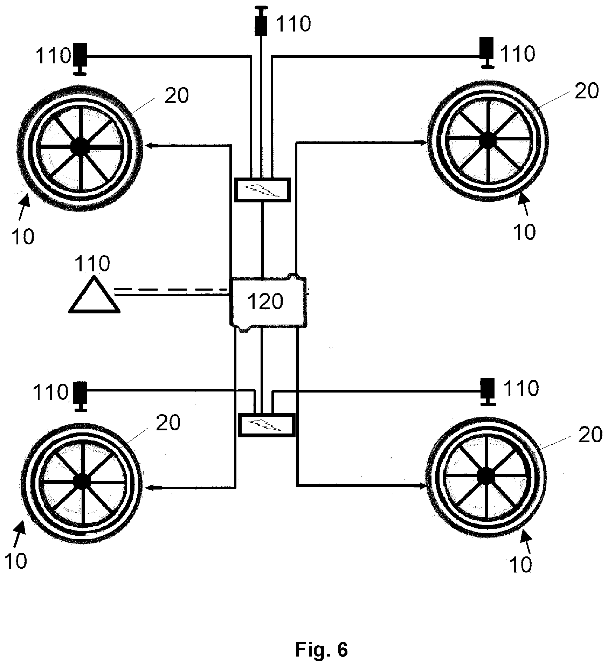

Figure 6 is a schematic view illustrating the main elements of a grip control system according to the invention.

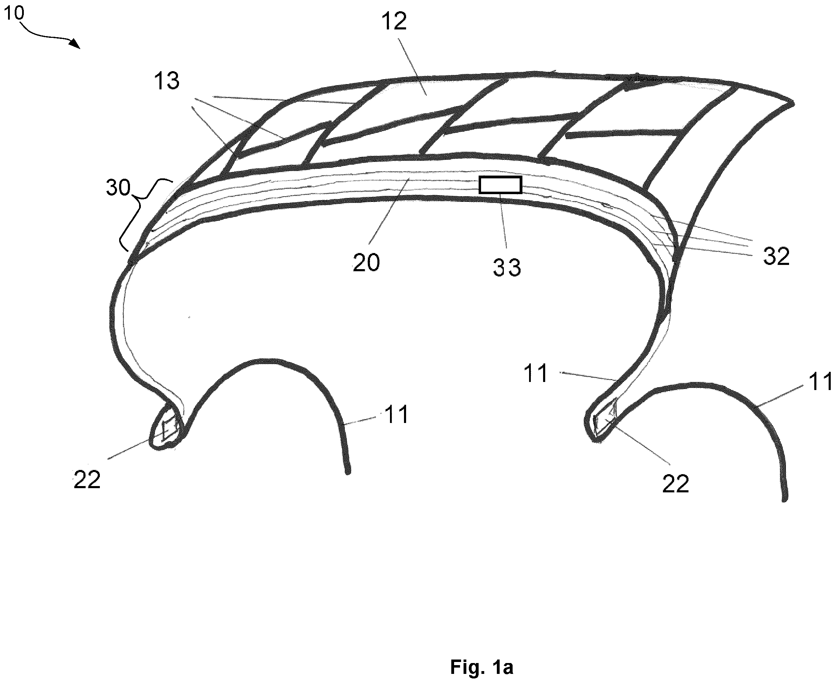

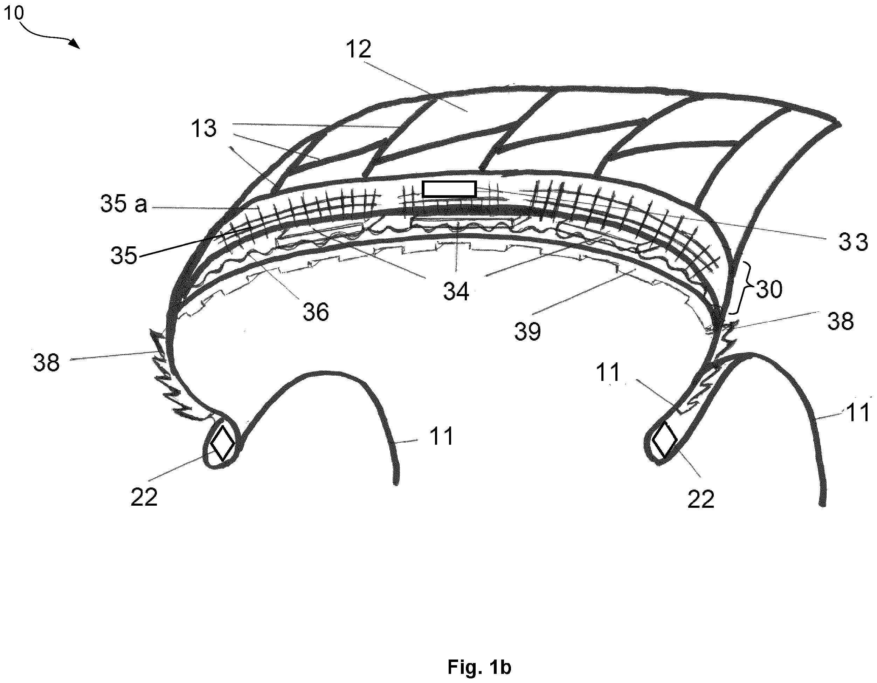

Figures 1a and 1b show schematic cross-sectional views of exemplary embodiments of an active tyre 10 according to the invention. The tyre 10 comprises a tread 12 and conventional structural layers, such as a carcass of fabric or metal, a belt cushion, an air barrier layer, etc., attached to each other, as is known to the person skilled in the art. However, these structural layers are not shown in the figures for the sake of simplicity. In the context of the present invention, the term tyre 10 is understood to refer primarily to a tyre for motor vehicles, in particular passenger cars, trucks, racing cars or motorcycles, but the tyre 10 may also be a tyre for other vehicles, such as aircraft landing gear, etc. And by tread 12 is meant the outermost cylindrical outer layer of the tyre 10 in contact with the road, as known to the person skilled in the art. The tread 12 is made up of a rubber compound and can be either slick or contain water expelling grooves 13 (tread pattern).

The tyre 10 according to the invention comprises electrically controllable active layer 20 arranged under the tread 12, the active layer 20 being provided with temperature control unit 30 adapted to vary the temperature of the tread 12. The active layer 20 is in the form of a cylindrical slit running circumferentially around the circumference of the tyre 10, below and parallel to the tread 12, the width of the active layer 20 preferably being the same as the width of the tread 12, as shown in Figures 1a and 1b respectively. In a preferred embodiment, the active layer 20 is arranged between the layers of the tyre 10, preferably directly below and in contact with the tread 12. That is, the active layer 20 is integrated into the tyre 10, which is preferably incorporated during the manufacture of the tyre 10. It is noted that the active layer 20 does not necessarily need to be in direct contact with the tread 12, so that other layers may be provided between the active layer 20 and the tread 12. Furthermore, embodiments are also possible in which the active layer 20 is not integrated inside the tyre 10, i.e. the active layer 20 is not between the layers of the tyre 10, but is fixed to the inner side of the tyre 10 opposite the tread 12, for example by means of adhesive. In this case, the active layer 20 will therefore be the innermost layer of the tyre 10.

The active layer 20 according to the invention is provided with a temperature control unit 30 adapted to vary the temperature of the tread 12. The active layer 20 may be formed, for example, as a mesh-like layer, such as a square-mesh fiberglass, ribbon-like, or thread-like slate layer, to which the temperature control unit 30 is applied (glued, soldered, or laminated). The active layer 20 is sufficiently flexible to withstand the deformations that occur during the use of the tyre 10. In the context of the present invention, the temperature control unit 30 is understood to be an electrical device whose temperature can be varied (increased or, as the case may be, decreased) by applying an electric current.

In a possible embodiment, the temperature control unit 30 is configured to generate heat only, i.e., as a heating element for increasing the temperature of the tread 12. Such a temperature control unit 30 may for example be configured as a plurality of heating lines 32 as shown in Figure 1a, or as a plurality of heating filaments (not shown) arranged in a threaded arrangement, wound side by side and spaced apart by an appropriate distance (e.g. 10-30 mm), along the circumference of the tyre 10. The size, length, power or type of the heating filaments may be varied depending on the size and configuration of the tyre 10. It is noted that instead of an integrated heating filament or heating line 32, any other design of heat emitter unit that can be operated by an electrical current known per se may be used, such as an electrical heating strip, an integrated thermoelectric component (heating resistor, thermistor, etc.), or a low voltage heating film, as known to the person skilled in the art. Preferably, the temperature control unit 30 of the active layer 20 is electrically charged via a plurality (e.g., 2-4) of electrical contacts 22 integrated into the sidewall 11 of the tyre 10, said contacts 22 being formed adjacent to each other in the rim edge (not shown in the figures) and being used for safe, water-tight conduction of the electrical current. For example, the rims themselves receive the current from the vehicle through known sliding contacts arranged on the rim axle. The operating voltage of the temperature control unit 30 may be, for example, the existing 12V to 24V to 48V DC or AC voltage of the vehicle's own system using the tyre 10, or any other voltage, as appropriate. Preferably the temperature generated by the temperature control unit 30 is between +10°C and +120°C, which is transmitted to the tread 12 via thermal conduction. In this way, in harsh temperature and weather conditions (cold, snowy, foggy), the temperature of the tread 12 can be adaptively set to the optimum temperature for grip. It is noted that this design is ideal for use mainly on routes exposed to persistently low temperature conditions, and can be used in cold, frosty climates in the first instance, to achieve and maintain ideal and safe grip.

There may be circumstances when it is necessary to cool, rather than heat, the tread 12 for optimum grip and to protect the tyre 10. Cooling the tread 12 not only ensures optimum grip, but also prevents a puncture. Cooling of the tread 12 may be necessary in hot climates, for example, or in trucks due to heavy loads during transport, frequent intensive braking on downhill gradients, etc. Therefore, in the preferred embodiment shown in Figure 1b, the temperature control unit 30 is configured as one or more Peltier elements 34 adapted to both increase and decrease the temperature of the tread 12. The Peltier elements 34 may be electrical devices known per se, based on the Peltier effect, wherein heat is transferred from one side of the Peltier element 34 to the other side of the Peltier element 34 under the action of an electric current. The Peltier elements 34 may be designed, for example, as 20x20mm, 60x60mm, 80x80mm, or any other custom sized low voltage, possibly flexible Peltier element-based unit. Preferably, the active layer 20 comprises 6-8 Peltier elements 34 equally spaced along the circumference of the tyre 10. The number and design type of the Peltier elements 34 can change depending on the size and application of the tyre 10.

One side of the Peltier elements 34 cools (cold side) and the other side heats up (hot side) depending on the direction of the voltage, as known to the skilled person. For this reason, in a preferred embodiment, to increase the efficiency and ensure the effective operation of the Peltier elements 34, heat equalizing element 36 is arranged on the side of the active layer 20 opposite to the tread 12 for evenly distributing and dissipating the inverse heat generated by the one or more Peltier elements 34 from the tread 12. The heat equalizing element 36 may be configured, for example, as a flexible metal foil or plate that dissipates the "inverse heat" generated on the opposite side ("back side") of the Peltier element 34 from the tread 12. In the context of the present description, heat dissipation is understood broadly as follows. When the tread 12 is cooled, the opposite side of the Peltier element 34 heats up, and this heat is then transferred to, for example, the sidewall 11 and/or rim of the tyre 10 by means of the heat equalising element 36. However, when the tread 12 is heated, the counter side of Peltier element 34 cools down. In this case, heat is transferred from the sidewall 11 and/or rim of the tyre 10 to the counter side of the Peltier element 34 by means of the heat equalising element 36. In a preferred embodiment, the heat equalizing element 36 is configured as a flexible metal plate in contact with the one or more Peltier elements 34 and provided with cooling ribs 38 projecting from the sidewall 11 of the tyre 10. The protrusion of the cooling ribs 38 from the sidewall 11 is preferably 0,5 to 1 mm. In a particularly preferred embodiment, a thermal insulating layer 39 is arranged on the side of the active layer 20 opposite to the tread 12, which sandwiches the temperature control unit 30 together with the tread 12. Preferably, the thermal insulating layer 39 is positioned directly below and in contact with the active layer 20 and is intended to prevent the thermal effect generated by the temperature control unit 30 from spreading to further structural layers of the tyre 10 and from affecting the air pressure inside the tyre 10. In other words, the thermal insulating layer 39 is preferably arranged to separate not only the air inside the tyre 10, but also the structural layers of the tyre 10 below the active layer 20 from the temperature control unit 30. The thermal insulating layer 39 has a flexible design, for example with a thickness of between 3 and 10 mm. The operating voltage of the Peltier elements 34 may be, for example, the existing voltage of the vehicle's own system using the tyre 10, 12V to 24V to 48V DC or AC, or any other voltage, as appropriate. Preferably the temperature generated by the Peltier elements 34 is between -5°C and +75°C, which is transmitted to the tread 12 via thermal conduction.

The embodiments shown in Figures 1a and 1b preferably further comprise one or more temperature sensors 33, known per se, incorporated in the active layer 20 for measuring the temperature of the tread 12, whereby the temperature of the tread 12 can be more accurately determined and adjusted. In a particularly preferred embodiment, a flexible heat transfer element 35, preferably configured as a flexible metal plate, is arranged on the side of the active layer 20 facing the tread 12 for uniformly distributing the heat generated by the temperature control unit 30 and transferring it to the tread 12. The heat transfer element 35 facilitates heat conduction between the temperature control unit 30 and the tread 12, thus allowing faster heat dissipation during both heating and cooling. The heat transfer element 35 is preferably provided with spikes 35a which penetrate the tread 12, thereby improving heat transfer.

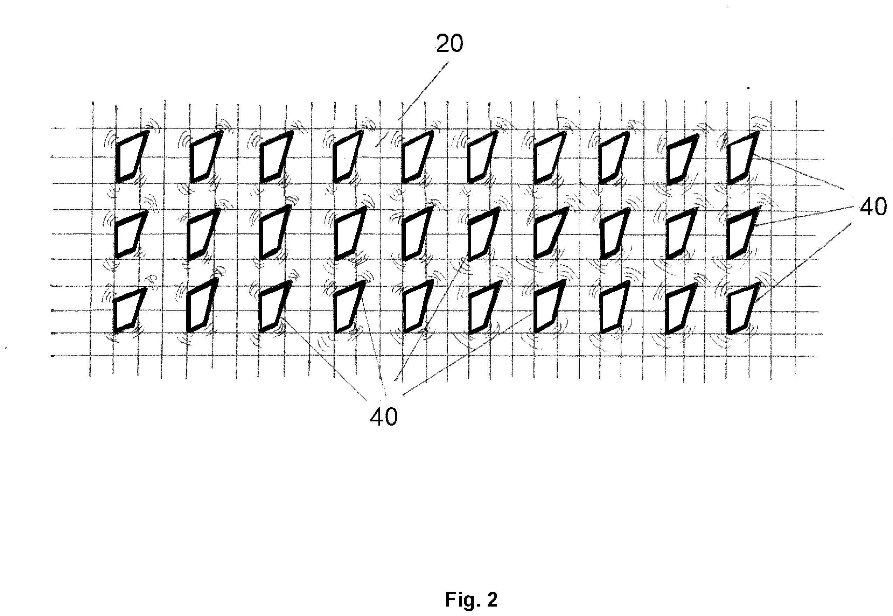

It is known that on wet roads, above a certain speed, a conventional tyre can float on the surface of the water layer that has formed, losing contact with the road surface. This phenomenon (aquaplaning) poses a significant risk to vehicle handling and stability and can lead to accidents. The thicker and more continuous the layer of water on the road, the greater the risk of aquaplaning. In conventional tyres, the water layer under the tread is removed by water expelling grooves formed in the tread, but this is only effective up to a limited speed (around 70-80 km/h). Therefore, in the preferred embodiment shown in Figure 2, in order to eliminate or reduce the effect of aquaplaning, the active layer 20 is provided with a resonator unit 40 adapted to mechanically vibrate the tread 12, preferably at a frequency between 10KHz and 250KHz, or other frequencies as appropriate. The vibrated tread 12 breaks up the continuous structure of the water layer under the tyre 10, causing the water layer on the road to break up into small spheres which individually can no longer support the weight of the vehicle. This causes the tyre 10 to expel the water layer that has broken up into spheres, allowing the tread 12 to come into direct contact with the road, under the weight load on the tread and the road surface below, eliminating the aquaplaning phenomenon and regaining the road grip interaction of the tyre 10. In the context of the present invention, the resonator unit 40 is understood to be an electromechanical device known per se which is caused to vibrate in response to an electric current. Such a resonator unit 40 may be created, for example, by means of known piezoelectric ceramic resonators, high frequency mechanical vibration coils or electromagnetic membranes, etc., applied (glued, soldered or laminated) to the active layer 20 in a circumferential manner along the tread 12. The resonator unit 40 can be operated and controlled, for example, by signals from sensors and additional sensors (e.g. water sensor, ground scanner, optical retro-reflection sensor, moisture sensor, rain sensor, etc.) in the vehicle, taking into account the thickness of the water layer, the intensity of the rain and the driving parameters of the vehicle, monitoring the current extent of the aquaplaning threshold. These data are preferably provided partly or entirely by the vehicle's existing diagnostic and safety systems (e.g. ABS, SRS).

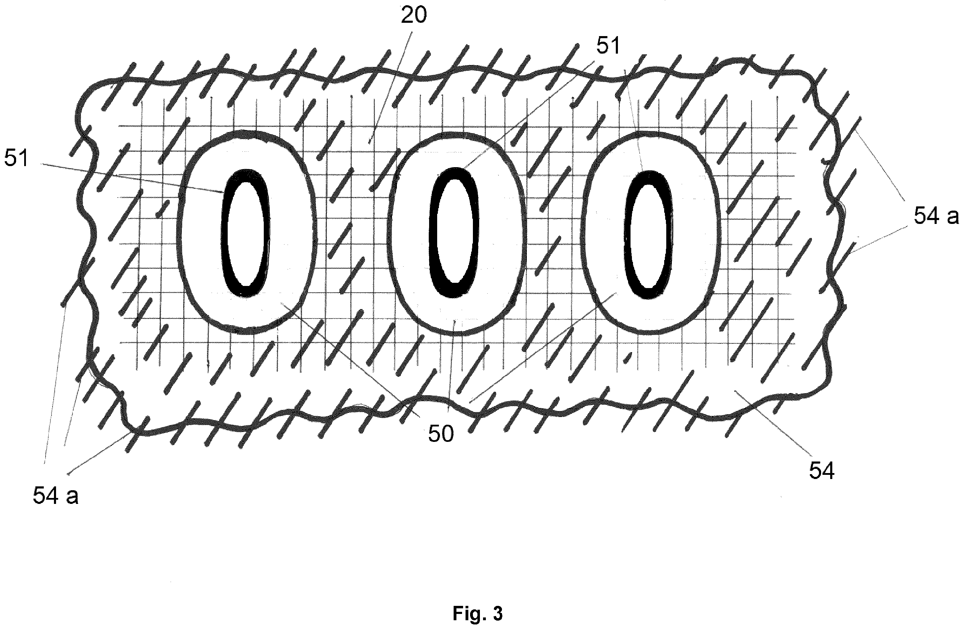

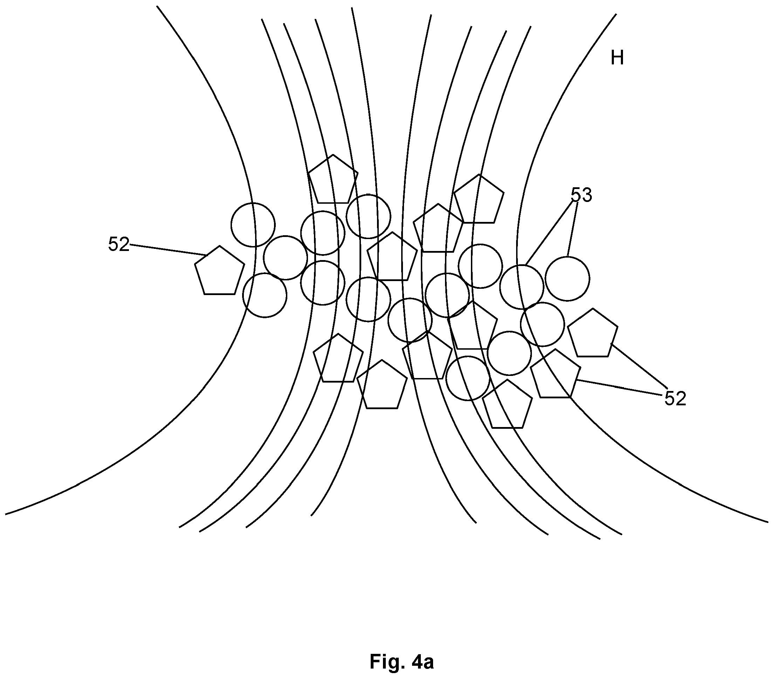

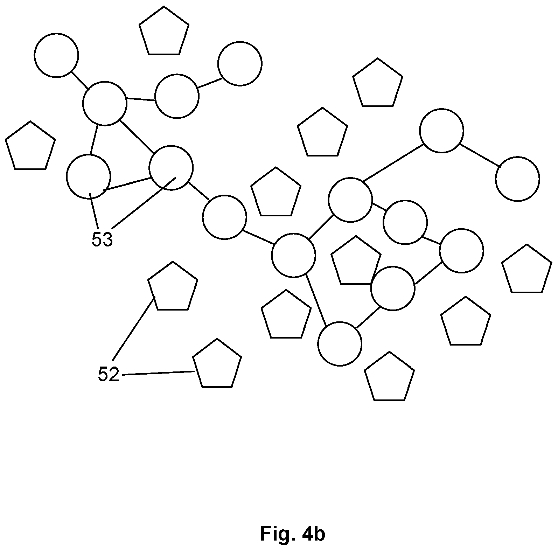

In addition to temperature, the softness (or hardness) of the tread 12 is an important factor affecting grip, the optimum value of which depends on the quality of the road surface, its contamination, temperature, etc. The softness of the tread of conventional tyres is determined by the compound used and the current tread temperature. To change the softness of the tread in a targeted way, the tyre had to be replaced (see in racing, e.g. Formula 1). In a particularly preferred embodiment, the tyre is designed so that its tread 12 can change its material to a soft or hard state according to the road conditions, thus ensuring optimal grip with the road surface. In this embodiment, the special design of the tread 12 and active layer 20 allows the softness of the tread 12 to be continuously controlled within a range of hardness. The material of the tread 12 comprises magnetisable particles 52, and the active layer 20 is provided with an electromagnetic unit 50 adapted to generate an electromagnetic field H around the tread 12, as can be seen, for example, in Figure 3. Preferably, the electromagnetic unit 50 comprises a plurality of electromagnets 51, for example 8 to 25, applied to the active layer 20 and arranged circumferentially along the tread 12 to generate an electromagnetic field H encompassing the running surface 12. The electromagnets 51 may be, for example, flexible induction electric coils with an iron core, the number of turns and energy absorption of which is selected depending on the size of the tyre 10 and the magnitude of the electromagnetic field H to be generated. In a preferred embodiment, the electromagnetic unit 50 comprises a flexible, perforated metal film 54 for uniformly distributing the electromagnetic field H between the electromagnetic unit 50 and the tread 12. The metal film 54 is arranged between the electromagnetic unit 50 and the tread 12. The metal film 54 is preferably provided with spikes 54a penetrating the tread 12, thereby improving the penetration of the electromagnetic field H into the tread 12. It is noted that the function of the metal film 54 may be performed by the heat transfer element 35 as previously described, i.e. they may be formed as the same component, or, as the case may be, by the metal ply layer already present in the tyre 10 (not shown in the figure). Magnetisable particles 52 in the context of the present description are understood to be ferro- or para-magnetic particles such as Fe, Fe2O3, Cr, CrO2, Mg, MgO2, etc., which are uniformly mixed into the elastomeric material of the tread 12 during its manufacture. The ferromagnetic or para-magnetic particles 52 mixed in the soft rubber compound of the tread 12 are mixed with soft elastomer molecules 53 and, under the influence of the electromagnetic field H created by the active layer 20, they are pressed tightly together by the integrated magnetisable particles 52, thus creating the harder rubber structure (see Figure 4a). As the soft base rubber compound of the tread 12 is quite elastic, the electromagnetic field H generated will pull the rubber molecules together, thus forming the hard state. As the electromagnetic field H is reduced or eliminated, the rubber mixture of the tread 12 gradually regains its original softer state as the elastomeric molecules 53 are released from the squeeze of the magnetisable particles 52, thus forming a base (softer) structural state (see Figure 4b). By linearly controlling these states, a continuous back-and-forth hardness-controllable structural physical state change can be generated in the tread 12 material, with a response time of typically a few tenths to thousandths of a second. Therefore, the current grip value of the tyre 10 on the road surface can be changed immediately and adjusted automatically.

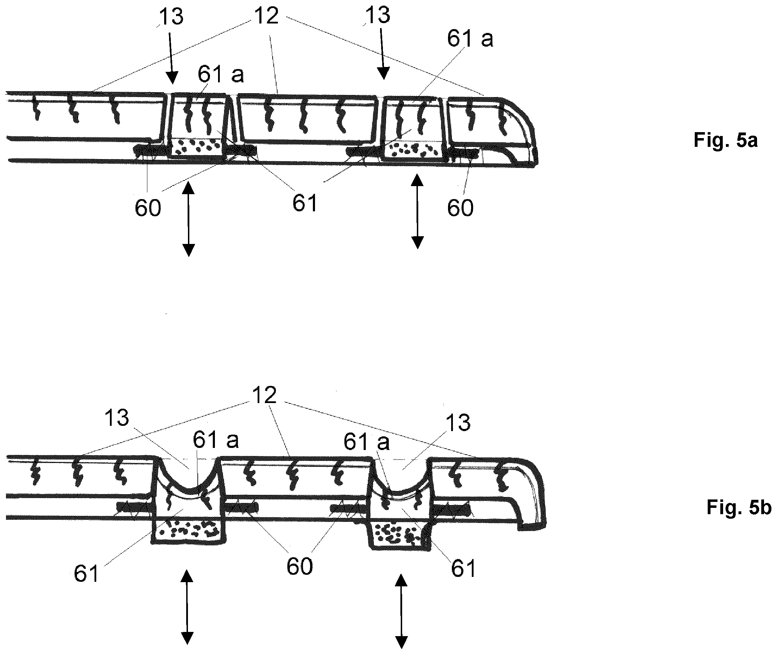

It is known that in the so-called slick condition, the tyre 10 has the highest contact surface area with the road, which is the theoretical and practical maximum grip, but in wet, rainy weather these slick tyres are not usable. For wet road surfaces, water expelling grooves 13 are used in the tread 12 to avoid slipping. In other words, conventional tyres are either slick or have water expelling grooves 13. In the preferred embodiments shown in Figures 5a and 5b, water expelling grooves 13 are formed in the tread 12 and strips 61 are arranged in the water expelling grooves 13 to fill the grooves 13 and to be displaceable in a direction perpendicular to the tread 12, and the active layer 20 comprises actuators 60 for moving the strips 61 in a direction perpendicular to the tread 12. In other words, the strips 61 are adapted to be moved in the grooves 13 in directions perpendicular to the tangential plane of the tread 12 at a given point, i.e. in the radial direction, by means of the actuators 60, as indicated by the two-way arrows in Figures 5a and 5b. The material of the strips 61, in particular the material of their outer surface 61a opposite the actuators 60, is preferably the same as the material of the tread 12. The strips 61 are attached to the actuators 60 at their sides opposite their outer surface 61a. In the base position of the actuators 60, the outer surface 61a of the strips 61 is flush with the plane of the tread 12, i.e. the water expelling grooves 13 are not visible. The surface of the tyre 10 in this condition is completely smooth, i.e. slick, suitable for driving on a completely dry clean road surface or for racing on a racetrack. By operating the actuators 60, the strips 61 are sunk into the grooves 13, so that the water expelling grooves 13 appear to be protruding from the flat surface. This makes it safe to race and drive in wet, rainy weather without having to replace the tyre 10 or the entire wheel. The resulting grooves 13 make driving safer on wet roads and increase the stability of the car in races, reducing lap times and eliminating the need to retire from the race due to tyre changes. Compared to the outer surface of the tread 12, the amount of indentation of the strips 61 required to form the tread pattern is preferably 5-8 mm. It is noted that the movement of the strips 61 in the water expelling grooves 13 is interpreted broadly and includes both cases where:
a) The strips 61 are provided in the grooves 13 as separate elements, i.e. the strips 61 and the contacting lateral surfaces of the grooves 13 may move relative to each other (see Figure 5a).
b) The strips 61 are integrally formed with the water expelling grooves 13 and the strips 61 are made of a flexible elastomeric material which is deformable by means of the actuators 60 and displaceable by deformation in the grooves 13. In this case, the strips 61 and the contacting lateral surfaces of the grooves 13 are fixed to each other and the grooves 13 are formed on the tread 12 such that the strips 61 are deformed by the actuators 60 (see Figure 5b).

The invention also relates to a grip-enhancing system 100 for a motor vehicle, comprising an active tyre 10 according to the invention, sensors 110 for directly or indirectly determining the grip of the active tyre 10 on the road surface, and an electronic control unit 120 for receiving, processing and storing data for controlling the active layer 20 on the basis of signals from the sensors 110, the electronic control unit 120 being in data communication with the sensors 110. In the context of the present invention, the term control unit 120 is interpreted broadly to include any set of hardware and software components capable of receiving, processing, and controlling the active layer 20 based on the data, such as a computer, SoC, microcontroller, etc. The control unit 120 may preferably be, for example, the vehicle's own on-board computer, or the control unit of the vehicle's integrated driving stability control system, etc. In a preferred embodiment, the sensors 110 are selected from the group consisting of a rain sensor, an optical ground sensor, a ground humidity sensor, an air temperature sensor, a ground temperature sensor, a tread temperature sensor, an acceleration sensor, and a wheel rotation sensor. One or more of the sensors 110 may also be the vehicle's own existing sensor.

Various modification to the above disclosed embodiment will be apparent to a person skilled in the art without departing from the scope of protection determined by the attached claims.

## Claims

1. Active tyre (10) having a tread (12), **characterized by** comprising an electrically controllable active layer (20) arranged under the tread (12), the active layer (20) being provided with a temperature control unit (30) for varying the temperature of the tread (12).

2. An active tyre (10) according to claim 1, **characterized in that** the temperature control unit (30) is configured as a heating element, preferably as a heating line (32), adapted to increase the temperature of the tread (12).

3. An active tyre (10) according to claim 1, **characterized in that** the temperature control unit (30) is configured as one or more Peltier elements (34) adapted to both increase and decrease the temperature of the tread (12).

4. An active tyre (10) according to claim 3, **characterized in that** on the side of the active layer (20) opposite the tread (12), a heat equalising element (36) for uniformly distributing and dissipating the inverse heat generated by the one or more Peltier elements (34) is arranged.

5. An active tyre (10) according to claim 4, **characterized in that** the heat equalising element (36) is formed as a flexible metal plate in contact with the one or more Peltier elements (34), the flexible metal plate being provided with cooling ribs (38) projecting from a sidewall (11) of the tyre (10).

6. An active tyre (10) according to any one of claims 1 to 5, **characterized in that** on the side of the active layer (20) opposite to the tread (12), a thermal insulating layer (39) is arranged sandwiching the temperature control unit (30) together with the tread (12).

7. An active tyre (10) according to any one of claims 1 to 6, **characterized in that** a heat transfer element (35), preferably in the form of a flexible metal plate, is arranged on the side of the active layer (20) facing the tread (12) for uniformly distributing the heat generated by the temperature control unit (30) and transferring it to the tread (12).

8. An active tyre (10) according to any one of claims 1 to 7, **characterized in that** the active layer (20) comprises one or more temperature sensors (33) for measuring the temperature of the tread (12).

9. An active tyre (10) according to any one of claims 1 to 8, **characterized in that** the active layer (20) comprises a resonator unit (40) adapted to mechanically vibrate the tread (12), preferably at a frequency between 10KHz and 250KHz.

10. An active tyre (10) according to any one of claims 1 to 9, **characterized in that** the tread (12) comprises magnetisable particles (52) and the active layer (20) is provided with an electromagnetic unit (50) adapted to generate an electromagnetic field (H) surrounding the tread (12).

11. An active tyre (10) according to claim 10, **characterized in that** the electromagnetic unit (50) comprises a flexible perforated metal film (54) for uniformly distributing the electromagnetic field (H) along the electromagnetic unit (50).

12. An active tyre (10) according to any one of claims 1 to 11, **characterized in that** water expelling grooves (13) are formed in the tread (12) and bands (61) are arranged in the grooves (13) to fill the grooves (13) and to be movable in a direction perpendicular to the tread (12), and the active layer (20) comprises actuators (60) for moving the bands (61) in a direction perpendicular to the tread (12).

13. An active tyre (10) according to claim 12, **characterized in that** the bands (61) are integrally formed with the water expelling grooves (13) and the bands (61) are made of a flexible elastomer which is deformable by means of the actuators (60) and movable in the grooves (13) by deformation.

14. A grip control system (100) for a vehicle, **characterized in that** it comprises an active tyre (10) according to any one of claims 1 to 13, sensors (110) for directly or indirectly determining the grip of the active tyre (10) on a road surface, and an electronic control unit (120) for controlling the active layer (20) based on signals from the sensors (110).

15. A grip control system (100) according to claim 14, **characterized in that** the sensors (110) are selected from the group consisting of a rain sensor, an optical ground sensor, a ground humidity sensor, an air temperature sensor, a ground temperature sensor, a tread temperature sensor, an acceleration sensor and a wheel rotation sensor.
